# EUROPEAN PATENT APPLICATION

(11) **EP 2 048 563 A1**
(43) Date of publication of application: **15.04.2009**
(21) Application number: 08165493.1
(22) Date of filing: 30.09.2008
(51) Int. Cl.: G05D 16/06, F16K 1/44

(54) **Pressure regulator**

(30) Priority: 09.10.2007 IT BO20070679
(71) Applicant: A.M. S.R.L., 40139 Bologna (IT)
(72) Inventor: Vanini, Giuseppe, 40139 Bologna (IT)
(74) Representative: Porsia, Dino

(57) **Abstract**

A gas pressure regulator (2, 3), for example a pressure regulator for natural gas, methane and the like, comprising a hollow body (4) containing a first inlet pipe (5) for the entry of the gas at high pressure and a second pipe (6) for the outlet of the gas at lower pressure by a flow in a direction F, a calibrated aperture (7) with its axis X substantially perpendicular to the direction of the flow F, said aperture (7) being positioned on a partition (9) which divides the body (4) into two parts internally, and a regulating throttle member (10, 11) which is movable in a direction substantially parallel to the direction X, said member (10, 11) being operated by means of an operating rod (12, 13) and being capable of regulating and/or closing said aperture (7); the regulating throttle member (10, 11) also comprises a plug (16, 17) having adapter means (29) which permit a certain amount of angular movement between the plug (16, 17) and the operating rod (12, 13), in such a way as to permit the bedding of the plug (16, 17) on to the seat (21, 39) of the aperture (7) during the stage of the closure of the aperture (7) by the regulating member.

## Description

The present invention relates to a gas pressure regulator, more specifically a pressure regulator for use in the field of distribution networks for natural gas, methane and the like, for domestic and industrial use.

The pressure regulator according to the present invention is of the type described in International Patent Application WO-2006/106373, in the name of the present applicant, which illustrates a pressure regulating unit comprising two pressure regulators, one of which is the main pressure regulator which is used during the normal operation of the equipment, while the other is an emergency regulator which automatically comes into operation if the main regulator fails, this second regulator being commonly known as a "monitor".

The two regulators of the unit are fitted to a common hollow body having an inlet aperture connected to the gas supply, at high pressure, and an outlet aperture connected to the user devices, with gas at reduced pressure; throttle valves of the regulators for controlling and regulating the gas pressure and flow rate are also located in the body. The aforesaid regulation is carried out by lowering the gas pressure by restriction, using the throttle valve.

The operating principle of the aforesaid pressure regulators is essentially based on the difference between the pressure of the outlet gas downstream of the throttle valve and a reference pressure, for example atmospheric pressure; a further mode of operation, called pilot operation, may also be provided, using the dynamic action of the outlet gas flow to improve and extend the operation of the regulator in respect of ranges of pressure and flow rate.

In the pressure regulation unit illustrated in International Patent Application WO-2006/106373, the regulating and throttle valve is actuated by means of an operating head essentially composed of two chambers separated by a diaphragm, the aforesaid diaphragm comprising a disc connected to an operating rod which moves the valve.

One chamber is at atmospheric pressure, while the other chamber is at the pressure of the gas downstream of the regulating valve. The pressure difference between the two chambers of the operating head and the opposing spring causes the movement of the diaphragm, and consequently the valve rod, thus keeping the pressure constant as a function of the gas flow rate.

Other means of actuating the throttle valve may include the use of a piston, also operated in this case by the pressure difference between the gas leaving the regulator and a reference pressure; alternatively it is possible to provide motorized actuators which act independently of the pressure of the gas to be regulated.

By way of example, and without restrictive intent, some pressure levels of natural gas in distribution networks for domestic and industrial use will now be mentioned: the inlet pressure of the gas in the regulator may be about 5 bars, but as a general rule it can be in the range from 0.5 to 20 bars.

At the outlet, downstream of the regulating throttle valve, the pressure specified by standards or regulations for the distribution of gas to households may be about 20 mbar (millibars) above atmospheric pressure, but in this case the excess pressure of the outlet gas can be, as a general rule, in the range from 10 mbar to 4000 mbar.

The throttle valve has a wide calibrated aperture for the passage of gas, matched to the gas supply flow required by the users, and obviously the regulators can have various sizes and dimensions.

Purely by way of example and without restrictive intent, it may be mentioned that the calibrated cross section for this type of regulator is generally circular, with a diameter of about 25-100 mm.

When all the user devices served by the pressure regulator cease to require gas, or if the emergency closure of the regulator is required for any other reason, the pressure regulator must cut off the gas supply rapidly while maintaining the specified pressure difference between the gas supply point upstream of the throttle valve and the supply pipe leading to the user devices; in other words, the aforesaid pressure specified by the standards or regulations for the distribution of gas for domestic or industrial use must still be present downstream of the regulator.

To improve the efficiency of the gas supply shut-off, a balanced plug is provided for closing the gas passage aperture. The balancing device is located in the throttling member of the valve itself.

The plug, or the seat on which the plug forms a seal, also comprises a gasket, and the plug and seat must provide a perfect seal with the gasket and the rigid closing part bearing on each other precisely, without leakage, in order to prevent unacceptable pressure rises downstream of the regulator.

A problem encountered in pressure regulators of the aforementioned type is that the pressure level at which the plug is closed may not be adhered to, and more specifically the complete closing of the regulator may take place at a pressure level higher than the maximum permissible tolerances.

For example, the current European standard EN 334 limits the excess closing pressure to +10% with respect to the calibration value.

This problem arises from the fact that it is not always possible to obtain a perfectly sealed closure, owing to mechanical problems, and consequently a certain amount of pressurized gas flows from the upstream to the downstream end of the valve, thus raising the pressure in the area downstream of the plug.

When the pressure downstream of the plug increases, the force acting on the plug actuator also increases, thus increasing the pressure on the gasket, which by yielding causes the regulator to close.

The result is that the complete closure of the regulator is achieved, but, in order to obtain the aforesaid complete closure, the pressure in the area downstream of the regulating valve is stabilized at a level above the specified value, thus causing a rise of pressure in the outlet pipes above the nominal pressure specified by the standards or regulations.

A possible solution to this problem is to provide a highly precise fit between the plug and the seat, in order to create a continuous and uninterrupted contact between the gasket and the rigid closing part.

However, this solution is not entirely satisfactory, since it requires the highly precise machining of the parts in question, which is a difficult and expensive process.

Another possible solution is to use an operating device with an actuating diaphragm and the corresponding covers of considerably greater size, but this solution to the problem also entails higher costs and larger overall dimensions of the regulator.

It should be noted in this context that the aperture to be closed is of relatively large size, the diameter of the passage possibly being about 25 - 100 mm, as mentioned above, and consequently any small imperfections or misalignments in the operating rod or the bearing seat of the plug result in rather large areas of uneven contact at the perimeter between the plug and the seat.

The object of the present invention is therefore to provide an improved type of pressure regulator which enables a safe and efficient closure of the regulator to be achieved even if the components of the pressure regulator have large tolerances.

Another object of the present invention is to provide a pressure regulator of simple and economical construction.

According to one aspect of the present invention, what is described is a pressure regulator as specified in Claim 1. The dependent claims relate to preferred and advantageous embodiments of the invention.

Other objects and advantages of the present invention will be made clearer by the following detailed description of some preferred embodiments of the present invention, provided with reference to the attached drawings, in which:
- Figure 1 is a schematic view in partial section of a pressure regulator according to the present invention;
- Figure 2 is a schematic sectional view of a detail of the pressure regulator of Figure 1;
- Figure 3 is a schematic sectional view of another detail of the pressure regulator of Figure 1.

With reference to the drawings, the number 1 indicates a gas regulation unit comprising a main pressure regulator 2, an emergency pressure regulator or "monitor" 3, and a hollow body 4 common to both of the aforementioned pressure regulators.

The hollow body 4 comprises a first inlet pipe 5 for the entry of the gas at a supply pressure, and a second outlet pipe 6, in which the gas leaves at a reduced pressure with respect to the inlet pressure.

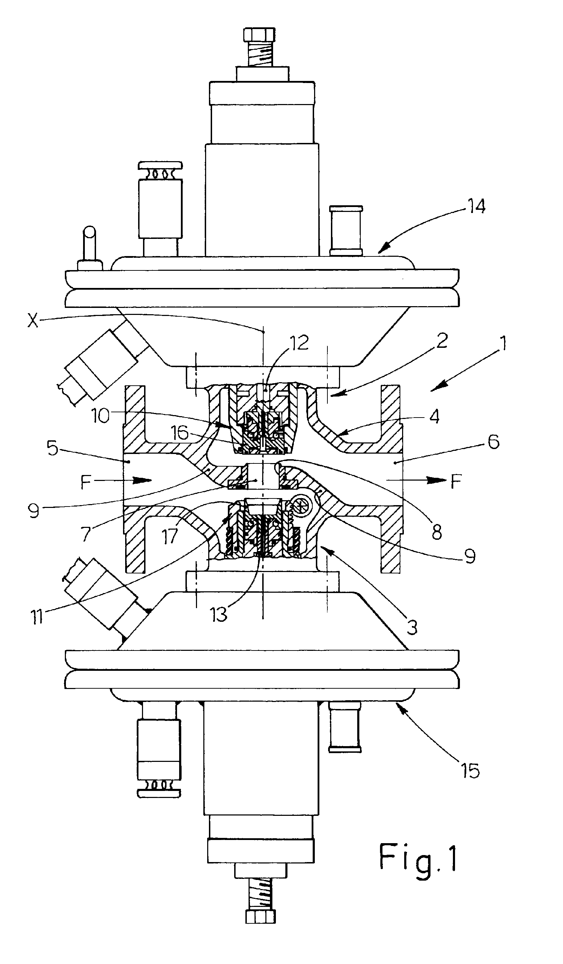

The second outlet pipe 6 is located downstream of the inlet pipe 5 with respect to the flow of the gas through the regulation unit 1, this flow being indicated by the arrows F in Figure 1. A calibrated aperture 7, with its axis X substantially perpendicular to the direction of the flow F, is positioned between the first pipe 5 and the second pipe 6.

The calibrated aperture 7 is formed by a calibrated ring 8 (the sealing seat) which forms a cylindrical pipe with a calibrated diameter, the calibrated ring 8 being positioned on a partition 9 which divides the inside of the hollow body 4 into two parts.

It should be noted that, for reasons of safety, the emergency regulator or monitor 3 is positioned upstream of the main regulator 2 with respect to the direction of the gas flow F. The two regulators 2 and 3 shown in the drawings are of the type that opens in case of failure (known as the "fail-to-open" type), but the present invention is to be understood as being applicable to any type of regulator, including pressure regulators which close in case of failure (known as the "fail-to-close" type).

The main pressure regulator 2 comprises a first regulating throttle member 10, and the emergency pressure regulator 3 comprises a second regulating throttle member 11. Each regulating throttle member 10, 11 is actuated by means of a corresponding rod 12, 13, by linear movement along the axis X, in such a way that the calibrated aperture 7 is opened or closed. The rods 12, 13 are actuated by respective actuating means 14, 15 of a known type, based substantially on an operating head formed by two chambers separated by a diaphragm (not shown). By methods which are known and which are therefore not shown in detail, each chamber of the operating head is brought to a different pressure, for example a reference pressure such as atmospheric pressure and the pressure of the outgoing gas.

The pressure difference between the two chambers, and the stress of an opposing spring, causes the diaphragm to move appropriately so as to keep the pressure of the outgoing gas substantially constant even at different gas flow rates.

The diaphragm comprises a disc (not shown) connected to the aforesaid operating rods 12, 13, so as to move the regulating and throttle valves 10, 11.

It should be noted that the present invention is also applicable to regulation units operated in different ways. As mentioned previously, it is possible to use pistons in place of the operating head with the diaphragm and opposing spring, these pistons also being actuated by the pressure difference between the gas leaving the regulator and a reference pressure; alternatively, it is possible to provide motorized actuators using energy not obtained from the pressure of the gas to be regulated.

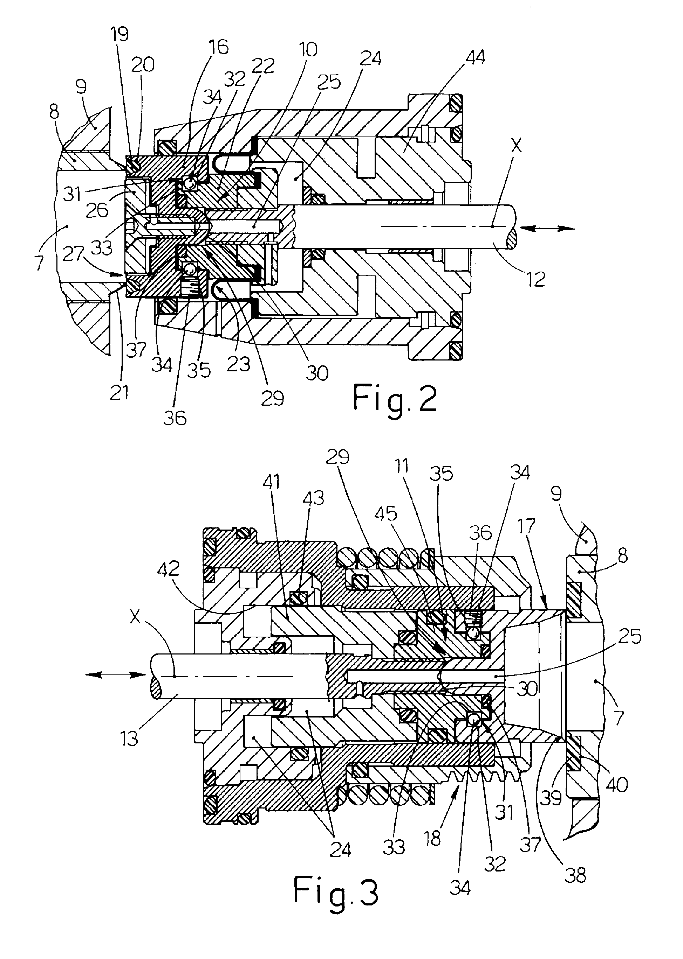

As shown in detail in Figures 2 and 2, each regulating member 10, 11 comprises a plug 16, 17.

In the examples shown in the drawings, two different combinations of regulation units 10, 11 and plugs 16, 17 are shown, but it is to be understood that the two types of regulation units and their plugs can be interchanged and used equally well for the main pressure regulator 2 or for the emergency regulator 3.

In the version shown in Figure 2, the plug 16 comprises a gasket 19 placed in a seat 20 formed in the plug 16 in order to form a seal against a seat 21 of the calibrated ring 8. The seat 21 assists in creating the contact with the gasket 19 and the closure.

The aforesaid gasket 19, made from elastomer, is of the type capable of yielding to assist the closure, and is also of the type suitable for contact with gas.

The plug 16 is balanced by means of a piston 22 and a corresponding diaphragm 23 which is slidable with respect to a guide 44, the seal between the piston 22 and the regulating member being formed by an annular diaphragm 23 which forms a balancing chamber 24.

The plug 16 also comprises an end piece 26 which creates a thin annular gap 27 between itself and the plug 16, and which communicates, through a passage 25, with the chamber 24.

The passage 25 passes through the plug 16, such that the aforesaid chamber 24 communicates with the area upstream of the regulating member 10.
The aforesaid pressure of the gas passing through the annular gap 27 and the passage 25 pressurizes the chamber 24, thus balancing the piston 22.

As mentioned above, owing to problems of tolerances, misalignment, and the like, the closure between the plug 16 and the seat 21 may not be immediate, and consequently there may be a flow of pressurized gas during the stage of closure, which increases the pressure downstream of the regulator.

In order to eliminate this problem, according to the invention, adapter means 29 are provided between the plug 16 and the piston 22.

In detail, the adapter means 29 comprise a spherical bearing 30 for the plug 16, this spherical bearing permitting a certain amount of angular movement between the plug 16 and the operating rod 12, and consequently also enabling the gasket 19 to be bedded on to the seat 21.

Thus, if the plug 16 is oblique with respect to the seat 21, it is possible to re-establish the continuous bearing of the gasket 19 on the seat 21 immediately, and thus obtain perfect closure without any flow of pressurized gas towards the area downstream of the regulator. In this way the regulator can be closed at the specified pressure, even if some components of the regulator, and particularly of the plug, are subject to imperfections, misalignments, variations in tolerance or other similar problems.

The adapter means 29 also comprise releasable coupling means 31 for keeping the plug 16 coupled to the driving means of the regulating member 10, which in this version are formed by the piston 22. The releasable coupling means 31 also permit the aforementioned angular movement between the plug 16 and the driving means, in other words the piston 22.

In the version shown in Figure 2, the releasable coupling means 31 comprise two complementary grooves 32, 33 which face each other and are positioned on the plug 16 and on the piston 22 respectively. The two grooves 32, 33 form a channel into which balls 34 are inserted.

The balls 34 are inserted through a hole 35 which is formed, for example, in the plug 16, and which is closed by a grub screw 36, and fill the channel formed by the two grooves 32, 33, thus preventing the separation and uncoupling of the plug 16 from the piston 22.

It should be noted that the dimensions of the balls 34 are smaller than those of the channel, thus giving a certain amount of clearance which permits a certain amount of angular movement between the plug 16 and the piston 22. The releasable coupling means could also be formed in a different way; for example, a metal wire (not shown) having the same length as the channel and a certain amount of clearance with respect to the channel could be inserted into the channel between the two grooves through an inclined hole.

Finally, the adapter means 29 also comprise resilient means 37 which act between the plug 16 and the driving means of the regulating member 10, in other words the piston 22, and which prevent uncontrolled movements, vibration and the like between the aforesaid components 16 and 22, because they keep these components pre-stressed into the extended state.

In the version of Figure 2, the resilient means comprise a toroidal gasket 37, made from resilient material, which is kept pre-stressed in a groove between the plug 16 and the piston 22.

The version of the regulating member 11 shown in Figure 3 comprises a closing plug 17 provided with a seat 38 which bears on a gasket 39 placed in a seat 40 of the calibrated ring 8.

It should be noted that the closing plug 17, with its gasket 39 positioned in the calibrated ring, is conceptually interchangeable with, and can be substituted for, the plug 16 described above and shown in Figure 2.

It is also to be understood that the plug 16 with its seat 21 on the calibrated ring 8 is also interchangeable with, and can be substituted for, the balancer for the plug 17 in the regulating member 11, which is described below.

A piston 41 of a different type from that of the preceding version is provided to balance the plug 17. In this version, the piston 41 has a small clearance with respect to the cylinder 42 in which it can slide, and the seal is formed by means of a toroidal gasket 43 placed in a seat of the cylinder 42 so as to be slidable on the piston 41; an intermediate sleeve 45 is also provided between the plug 17 and the piston 41, this sleeve also forming the driving means of the regulating member 11 for the plug 17.

The balancing chamber 24 is substantially identical to the balancing chamber of the preceding version, and is subjected to the gas pressure via a similar passage 25.

During the stage of closure of the regulator, the gas pressure from the upstream pipes is established in the passage 25, thus pressurizing the chamber 24 and balancing the piston 41.

This version of the regulating member 11 also includes adapter means 29, which permit a certain amount of angular movement between the plug 17 and the operating rod 13, and which therefore allow the annular seat 38 of the plug 17 to be bedded on to the gasket 39 of the calibrated ring 8 during the stage of closure of the regulating member.

The adapter means 29 are identical to those of the version of Figure 2, and are therefore indicated by the same reference numerals in Figure 3.

In particular, the adapter means 29 comprise a spherical bearing 30 for the plug 17, and releasable coupling means 31 for keeping the plug 17 coupled to the corresponding driving means, in other words the intermediate sleeve 45.

The releasable coupling means 31 also permit an angular movement between the plug 17 and the sleeve 45, and finally resilient means 37 which, in this version also, act between the plug 17 and sleeve 45 and prevent uncontrolled movements, vibration and the like, because they keep the plug 17 and the sleeve 45 pre-stressed into the extended state.

Overall, the present invention achieves the specified objects by means of the presence of the adapter means 29 which permit a certain amount of angular movement between the plugs 16 and 17 and their driving means.

Consequently, during the stage of the closure of the regulating member, the plug is immediately bedded on to the seat of the calibrated aperture which is to be closed, thus preventing the creation of excess pressure in the low-pressure pipes leading to the user devices.

The present invention also enables the pressure regulator to be constructed more economically, since it is no longer necessary to maintain strict tolerances and very precise alignments or larger dimensions of the diaphragms in the operating heads, because the closure of the plug is always assured at the nominal pressure specified for the low-pressure pipes leading to the user devices.

## Claims

1. Gas pressure regulator (2, 3), more specifically a pressure regulator for natural gas, methane and the like, comprising a hollow body (4) containing a first inlet pipe (5) for the entry of the gas at high pressure and a second pipe (6) for the outlet of the gas at lower pressure by a flow in a direction F, a calibrated aperture (7) with its axis X substantially perpendicular to the direction of the flow F, said aperture (7) being positioned on a partition (9) which divides the body (4) into two parts internally, a regulating throttle member (10, 11) which is movable in a direction substantially parallel to the direction X, said member (10, 11) being operated by means of an operating rod (12, 13) and being capable of regulating and/or closing said aperture (7), **characterized in that** said regulating throttle member (10, 11) comprises a plug (16, 17) having adapter means (29) which permit a certain amount of angular movement between the plug (16, 17) and the operating rod (12, 13), in such a way as to permit the bedding of the plug (16, 17) on to the seat (21, 39) of the aperture (7) during the stage of the closure of the aperture (7) by the regulating member.

2. Gas pressure regulator (2, 3) according to any one of the preceding claims, in which said plug (16, 17) comprises a piston (22, 41) for balancing the plug (16, 17) by means of the gas pressure which is present in the area facing the plug.

3. Gas pressure regulator (2, 3) according to Claim 1 or 2, in which said adapter means (29) comprise spherical bearing means (30) for the plug (16, 17), said spherical bearing (30) permitting a certain amount of angular movement between the plug (16, 17) and the operating rod (12, 13).

4. Gas pressure regulator (2, 3) according to any one of the preceding claims, in which said adapter means (29) comprise releasable coupling means (31) for keeping the plug (16, 17) coupled to the corresponding driving means (22, 45) of the regulating member (10, 11), while permitting a certain amount of angular movement between the plug (16, 17) and the corresponding driving means (22, 45).

5. Gas pressure regulator (2, 3) according to any one of the preceding claims, in which said adapter means (29) comprise resilient means (37) placed between the plug (16, 17) and the driving means (22, 45) of the regulating member (10, 11), said resilient means (37) being capable of keeping said plug (16, 17) prestressed into the extended state with respect to said driving means (22, 45).

6. Gas pressure regulator (2, 3) according to Claim 4 or 5, where Claim 5 is dependent on Claim 4, in which said releasable coupling means (31) comprise two complementary grooves (32, 33) facing each other and located, respectively, on the plug (16, 17) and on the driving means (22, 45).

7. Gas pressure regulator (2, 3) according to Claim 6, in which the two complementary grooves (32, 33) form a channel filled with balls (34), said balls (34) having smaller dimensions than those of the channel and having a certain amount of clearance within said channel, such that said plug (16, 17) and said driving means (22, 45) are kept coupled while a certain amount of angular movement is permitted between them.

8. Gas pressure regulator (2, 3) according to Claim 6, in which the two complementary grooves (32, 33) form a channel in which a metal wire is inserted, said wire having smaller dimensions than those of the channel and having a certain amount of clearance within said channel, such that said plug (16, 17) and said driving means (22, 45) are kept coupled while a certain amount of angular movement is permitted between them.

9. Gas pressure regulator according to any one of the preceding Claims 5 to 8, where Claims 6-8 are dependent on 5, in which said resilient means comprise a toroidal gasket (37), also known as an O-ring, made from resilient material and kept prestressed in a groove between the plug (16, 17) and the driving means (22, 45).

10. Gas pressure regulator (2, 3) according to any one of Claims 2 to 9, in which said piston (22, 41) faces a balancing chamber (24) which is subjected to the gas pressure present in the area facing the plug, via passage means (25, 27) which pass through the plug (16, 17).

11. Gas pressure regulator (2, 3) according to Claim 10, in which said piston (22), which is slidable with respect to the regulating member (10), has an annular diaphragm (23) to form a gas-tight seal between the piston (22) and the regulating member (10).

12. Gas pressure regulator (2, 3) according to Claim 10, in which said piston (41), which is slidable in a cylinder (42) of the regulating member (11), has a seal provided by a toroidal gasket (43) which is placed in a seat of the cylinder (42) and is slidable on the piston (41).
